# EUROPÄISCHE PATENTSCHRIFT

(11) **EP 2 704 811 B1**
(45) Veröffentlichungstag und Bekanntmachung des Hinweises auf die Patenterteilung: **08.11.2017**
(21) Anmeldenummer: 12718912.4
(22) Anmeldetag: 26.04.2012
(51) Int. Cl.: B01D 29/52, B01D 29/66

(54) **FILTERVORRICHTUNG**
FILTERING APPARATUS
DISPOSITIF FILTRANT

(30) Priorität: 05.05.2011 DE 102011100518
(43) Veröffentlichungstag der Anmeldung: 12.03.2014
(73) Patentinhaber: Hydac Process Technology GmbH, 66538 Neunkirchen (DE)
(72) Erfinder: WNUK, Ralf, 66450 Bexbach/Kleinottweiler (DE); GERSTNER, Jörg Hermann, 66346 Püttingen (DE); BÖTTCHER, Thomas, 66557 Illingen-Hüttigweiler (DE); MORAWIETZ, Thomas, 66299 Friedrichsthal (DE)
(74) Vertreter: Bartels, Martin Erich Arthur
(86) Internationale Anmeldenummer: PCT/EP2012/001773
(87) Internationale Veröffentlichungsnummer: WO 2012/150011

(56) Entgegenhaltungen:
- EP-A1- 0 827 768
- DE-A1- 4 030 084
- US-A- 2 731 107
- US-A- 3 283 903
- US-A- 4 055 500
- US-A- 5 906 751

## Beschreibung

Die Erfindung betrifft eine Filtervorrichtung mit den Merkmalen im Oberbegriff von Anspruch 1.

Eine in DE 10 2007 054 737 A1 offenbarte Filtervorrichtung ermöglicht einen kontinuierlichen Filtrationsbetrieb, wobei nacheinander Filterelemente, die zu regenerieren sind, rückgespült werden, während die Filtration über die restlichen Filterelemente fortgesetzt wird, so dass der Filtrationsbetrieb zu keiner Zeit unterbrochen wird.

Bei der bekannten Filtervorrichtung erfolgt der Rückspülvorgang nicht ausschließlich in der Weise, dass der in der Filtervorrichtung anstehende Systemdruck während der jeweiligen Rückspülphase einen Teilstrom des Filtrates das zu reinigende Filterelement in umgekehrter Richtung durchströmen lässt, um den Schmutz vom Element abzulösen und auszutragen, sondern dass, in dem Bestreben, auch hartnäckigere Verschmutzungen entfernen zu können, mittels einer Drucksteuereinrichtung an dem jeweils rückzuspülenden Filterelement ein Unterdruck erzeugt wird. Für die Rückspülung ist daher nicht nur der Systemdruck wirksam, sondern es steht unter Einwirkung der Drucksteuerung ein höherer Druckgradient zum Ablösen von Verschmutzungen zur Verfügung.

Bei der bekannten Filtervorrichtung weist die Drucksteuereinrichtung ein Absperrelement auf, durch das für einen jeweiligen Rückspülvorgang die Fluidverbindung zwischen dem in das Filtergehäuse einströmenden, zu filtrierenden Fluid und dem betreffenden, rückzuspülenden Filterelement sperrbar ist. Dadurch kommt es bei der vor dem Rückspülvorgang in das Filterelement eintretenden Fluidströmung zu einer Strömungsunterbrechung, so dass die beim Absperrvorgang herrschende Strömungsgeschwindigkeit als strömungsdynamischer Effekt eine Sogwirkung hervorruft. Dadurch steht für das Rückströmen von Filtrat an der Reinseite des betreffenden Filterelementes nicht nur der Systemdruck zur Verfügung, sondern das Rückströmen von Filtrat wird durch die Nachsaugwirkung verstärkt, die aufgrund des dynamischen Effektes zur Verfügung steht, der sich durch das Sperren der Strömung ergibt, die von der Schmutzseite her einströmt.

Die Größe des durch den Absperrvorgang erzielten hydrodynamischen Effekts ist allerdings von der Strömungsgeschwindigkeit abhängig und daher dementsprechend limitiert. Bei Einsatzgebieten, bei denen mit hartnäckigen Verschmutzungen zu rechnen ist, die von der Filterfläche schwer abzulösen sind, besteht daher die Gefahr, dass die hydrodynamisch unterstützte Rückspülwirkung nicht voll zufriedenstellend ist.

Die DE 40 30 084 A1 beschreibt eine gattungsgemäße Filtervorrichtung mit einer Mehrzahl von Filterelementen, die in einem Filtergehäuse mit einem Filtereinlass für zu filtrierendes Fluid und einem Filterauslass für das gefilterte Fluid aufnehmbar sind, wobei während des Filtrationsvorganges zumindest eines der Filterelemente zum Abreinigen seiner wirksamen Filterfläche mittels einer Rückspüleinrichtung rückspülbar ist, die eine Drucksteuereinrichtung zur Unterstützung der Rückspülung beinhaltet, wobei die Drucksteuereinrichtung einen Hydrospeicher beinhaltet, dessen eine Fluidkammer während des Filtrationsvorganges mit einer Menge an abgereinigtem Fluid befüllbar und für einen Rückspülvorgang mit einer Reinseite des einen abzureinigenden Filterelements verbindbar ist, wobei eine weitere Fluidkammer des Hydrospeichers für einen Rückspülvorgang mit einem Gasdruck beaufschlagbar ist, um durch eine dadurch bewirkte Bewegung eines Trennelementes des Hydrospeichers die Füllmenge des abgereinigten Fluids für den Rückspülvorgang zumindest teilweise aus der ersten Fluidkammer wieder abzugeben. Weitere Filtervorrichtungen gehen aus der US 2 731 107, der US 4 055 500, der EP 0 827 768 A1 und der US 5 906 751 hervor.
Im Hinblick auf diese Problematik stellt sich die Erfindung die Aufgabe, eine Filtervorrichtung zur Verfügung zu stellen, bei der eine durch Drucksteuerung unterstützte, besonders effektive Rückspülwirkung erreichbar ist. Erfindungsgemäß ist diese Aufgabe durch eine Filtervorrichtung gelöst, die die Merkmale des Patentanspruches 1 in seiner Gesamtheit aufweist.
Eine wesentliche Besonderheit der Erfindung besteht demgemäß darin, dass die Fluidkammer während des Filtrationsvorganges über eine Rückspülführung mit einer Reinseite des einen abzureinigenden Filterelements verbindbar ist, dass der Hydrospeicher und die Rückspülführung, miteinander verbunden, im Filtergehäuse drehbar angeordnet und für Einstellbewegungen zwischen Filtrationsbetrieb und Rückspülung mittels eines Drehantriebes drehbar sind und dass im Filtergehäuse ein sich an die reinseitigen Kammeranschlüsse der Elementkammern anschließender Überströmraum vorgesehen ist, der mit dem Ausgangsraum in Verbindung ist und aus dem die erste Fluidkammer des Hydrospeichers über eine in der Wand der Rückspülführung befindliche Auffüllbohrung mit abgereinigtem Fluid befüllbar ist.

Eine derartige Anordnung ermöglicht eine besonders einfache und kompakte Bauweise, indem an einem freien und gut zugänglichen Ende des Hydrospeichers ein Antrieb, vorzugsweise in Form eines elektrischen Getriebemotors, angebracht ist, mittels dessen der Hydrospeicher auf Drehstellungen einstellbar ist, in denen die Rückspülführung die Fluidverbindung zum abzureinigenden Filterelement bildet.

Die Filterelemente sind in jeweils einer eigenen Elementkammer aufnehmbar, die im Filtergehäuse auf einer die Zylinderachse konzentrisch umgebenden Kreislinie angeordnet sind. Bei dieser konzentrischen Anordnung lässt sich die Anschlussverbindung der einzelnen Elementkammern mit der drehbaren Rückspülführung besonders einfach gestalten.

Es ist vorgesehen, dass die Drucksteuereinrichtung einen Hydrospeicher beinhaltet, dessen eine Fluidkammer, während die Vorrichtung im Filtrationsbetrieb arbeitet, mit einer Menge an abgereinigtem Fluid befüllbar ist und für einen Rückspülvorgang über eine Rückspülführung mit der Reinseite des jeweils abzureinigenden Filterelements verbindbar ist. Bei einer Druckbeaufschlagung der weiteren Fluidkammer des Hydrospeichers führt die dadurch bewirkte Bewegung des Trennelementes des Hydrospeichers zu einem Ausstoß der Füllmenge des Fluids, das als Spülflüssigkeit über die Rückspülführung zum abzureinigenden Filterelement gelangt.

Durch Wahl der Höhe des Gasdruckes, der im Hydrospeicher für die Bewegung des Trennelements zur Anwendung gelangt, hat man es in der Hand, die Strömungsgeschwindigkeit der über die Rückspülführung zum Filterelement gelangenden Spülflüssigkeit optimal an die Gegebenheiten anzupassen, d.h. so zu wählen, dass in Anpassung an die Art des Filtermediums die bestmögliche Spülwirkung erreicht wird. Insbesondere bei verhältnismäßig druckfesten Filterelementen, wie konischen oder zylindrischen Spaltsiebrohrelementen, kann im Hydrospeicher mit hohem Druckniveau und damit hohen Strömungsgeschwindigkeiten gearbeitet werden, wodurch selbst hartnäckige Verschmutzungen von der Filterfläche sicher abgelöst werden.

Bei vorteilhaften Ausführungsbeispielen ist die weitere Fluidkammer des Hydrospeichers für den Rückspülvorgang mittels einer Ventilsteuereinrichtung mit einer Druckgasquelle verbindbar. In vielen Fällen kann die Verwendung von Pressluft besonders vorteilhaft sein, beispielsweise wenn die Filtervorrichtung in Verbindung mit Anlagen oder Einrichtungen betrieben wird, bei denen eine Pressluftversorgung vorhanden ist.

Vorzugsweise ist die weitere Fluidkammer des Hydrospeichers für den Rückspülvorgang mittels einer Ventilsteuereinrichtung mit einer Druckgasquelle verbindbar. Bei besonders vorteilhaften Ausführungsbeispielen ist die Anordnung hierbei so getroffen, dass als Druckgasquelle ein außerhalb des Filtergehäuses angeordneter Spülgastank vorgesehen ist. Ohne dass die Kompaktheit der Filtervorrichtung beeinträchtigt wird, kann dadurch durch einen beispielsweise mit Pressluft vorgeladenen Tank ein entsprechend großes, bevorratetes Gasvolumen für jeweilige Rückspülvorgänge zur Verfügung gestellt werden.

In besonders vorteilhafter Weise kann die Ventilsteuereinrichtung in einer von der Druckgasquelle zum Hydrospeicher führenden Spülgasleitung ein schnell öffnendes Ventil aufweisen. Durch eine sehr schnell erfolgende Druckbeaufschlagung ist dadurch eine stark beschleunigte Bewegung des Trennelementes des Hydrospeichers erreichbar, so dass für den Rückspülvorgang ein Druckstoß erzeugt wird, durch den auch hartnäckige Verschmutzungen von der Filterfläche ablösbar sind.

Als sehr schnell öffnendes Ventil kann vorteilhafterweise ein pneumatisch betätigbares Membranventil in der Spülgasleitung vorgesehen sein.

In besonders vorteilhafter Weise kann als Hydrospeicher ein Kolbenspeicher vorgesehen sein, der zusammen mit der an einem Zylinderende angeordneten Rückspülführung um die Zylinderachse drehbar ist. Im Vergleich zu anderen Speicherbauarten, wie Membranspeicher, Federspeicher, Balgspeicher oder dergleichen, zeichnet sich der Kolbenspeicher neben einer besonders robusten Bauweise durch ein gutes Verhältnis zwischen Baugröße und aufnehmbarer Füllmenge an gereinigtem Fluid aus, die dem gesamten Hubraum des Kolbens und somit näherungsweise dem Gesamtvolumen des Speicherzylinders entspricht.

In besonders vorteilhafter Weise kann der Hydrospeicher zwischen den ihn umgebenden Elementkammern derart angeordnet sein, dass sich die Fluidkammern des Hydrospeichers zwischen den an den Enden der Filterelemente befindlichen Kammeranschlüssen der Elementkammern befinden. Eine derartige Anordnung, bei der der Hydrospeicher zwischen dem jeweiligen Ein- und Austritt der Elementkammern integriert ist, ermöglicht eine besonders kompakte Bauweise der Gesamtvorrichtung mit einem besonders vorteilhaften Verhältnis zwischen erforderlicher Bauhöhe und erreichbarer Größe der nutzbaren Filterfläche.

Bei besonders vorteilhaften Ausführungsbeispielen sind im Filtergehäuse zwischen dem Hydrospeicher und den umgebenden Elementkammern ein die Rohseite beim Filtrationsvorgang bildender, den Filtereinlass aufweisender Eingangsraum sowie ein davon getrennter, mit dem Filterauslass verbundener, die Reinseite beim Filtrationsvorgang bildender Ausgangsraum vorhanden, von denen der erste Raum mit dem rohseitigen Kammeranschluss und der zweite mit dem reinseitigen Kammeranschluss der im Filtrationsbetrieb befindlichen Elementkammern in Verbindung sind.

Andererseits ist bei anderen Drehstellungen des Hydrospeichers, die dem Rückspülen einer Elementkammer entsprechen, die Rückspülführung mit dem reinseitigen Kammeranschluss der rückzuspülenden Elementkammer verbunden, wobei gleichzeitig ein an dem der Rückspülführung entgegengesetzten Ende des Zylinders des Hydrospeichers angeordneter Rückspülarm, der zusammen mit dem Hydrospeicher drehbar ist, für das Abströmen einer Rückspülmenge den rohseitigen Kammeranschluss der rückzuspülenden Elementkammer mit einer Rückspülleitung verbindet.

In der Fluidverbindung zwischen dem Rückspülarm und der Rückspülleitung kann ein motorisch betätigbares Rückspülventil angeordnet sein, wobei es sich vorzugsweise um einen Kugelhahn handelt, der mittels eines pneumatischen Antriebs drehbar sein kann.

Nachstehend ist die Erfindung anhand von in der Zeichnung dargestellten Ausführungsbeispielen im Einzelnen erläutert. Es zeigen:
- Fig. 1A bis 1C: schematisch vereinfacht gezeichnete, perspektivische Schrägansichten der erfindungsgemäßen Filtervorrichtung in einer Ausführungsform mit zwei bzw. vier bzw. sechs Filterelementkammern;
- Fig. 2 und 3: gegenüber Fig. 1 in größerem Maßstab gezeichnete, perspektivische Schrägansichten der Ausführungsform mit sechs Filterelementkammern, gesehen auf die Frontseite bzw. die Rückseite der Vorrichtung;
- Fig. 4: einen zentralen Längsschnitt der Ausführungsform von Fig. 2 und 3, wobei der Betriebszustand des Filtrationsbetriebes verdeutlicht ist;
- Fig. 5: einen der Fig. 4 entsprechenden Längsschnitt, wobei der Betriebszustand der Rückspülung der rechtsseitig sichtbaren Elementkammer verdeutlicht ist;
- Fig. 6: einen gegenüber Fig. 4 und 5 weiter vergrößert gezeichneten Längsschnitt eines den gezeigten Ausführungsformen der Filtervorrichtung zugeordneten Spülgastanks mit zugeordneten Funktionskomponenten; und
- Fig. 7: einen gegenüber Fig. 6 weiter vergrößert gezeichneten Längsschnitt eines dem Spülgastank von Fig. 6 zugeordneten Membranventils.

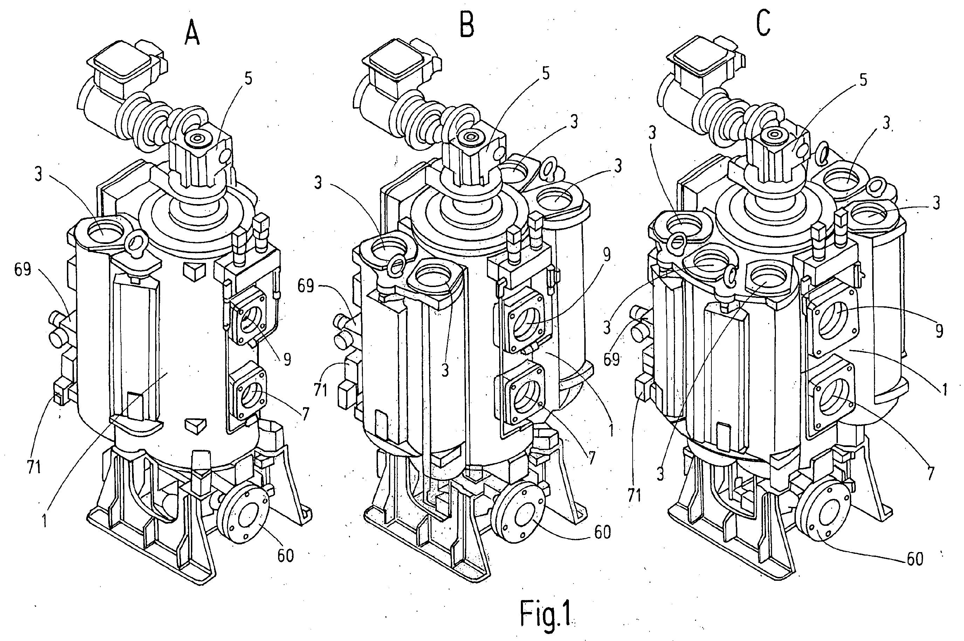

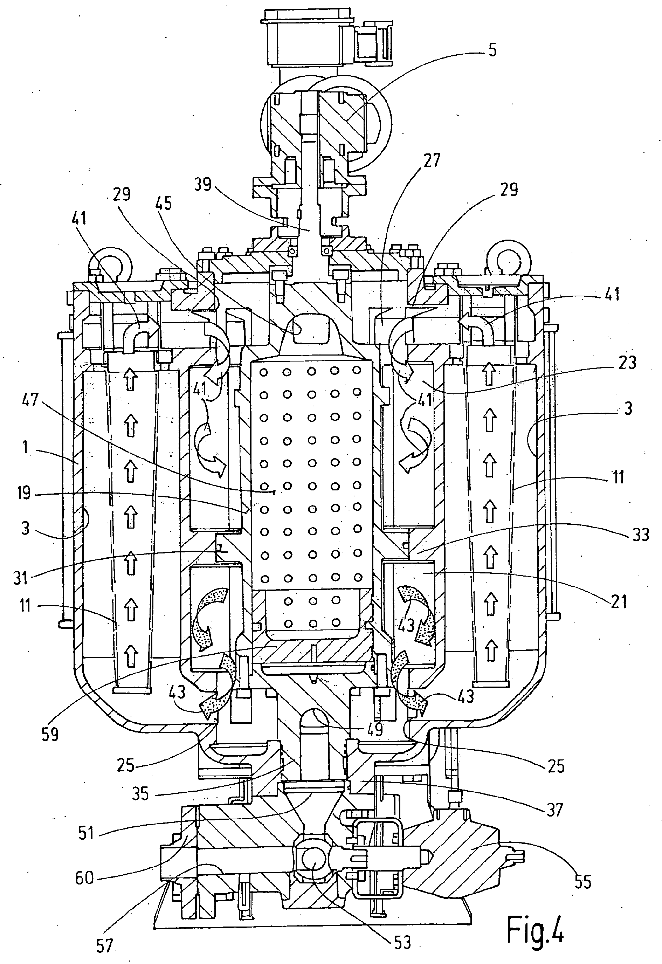

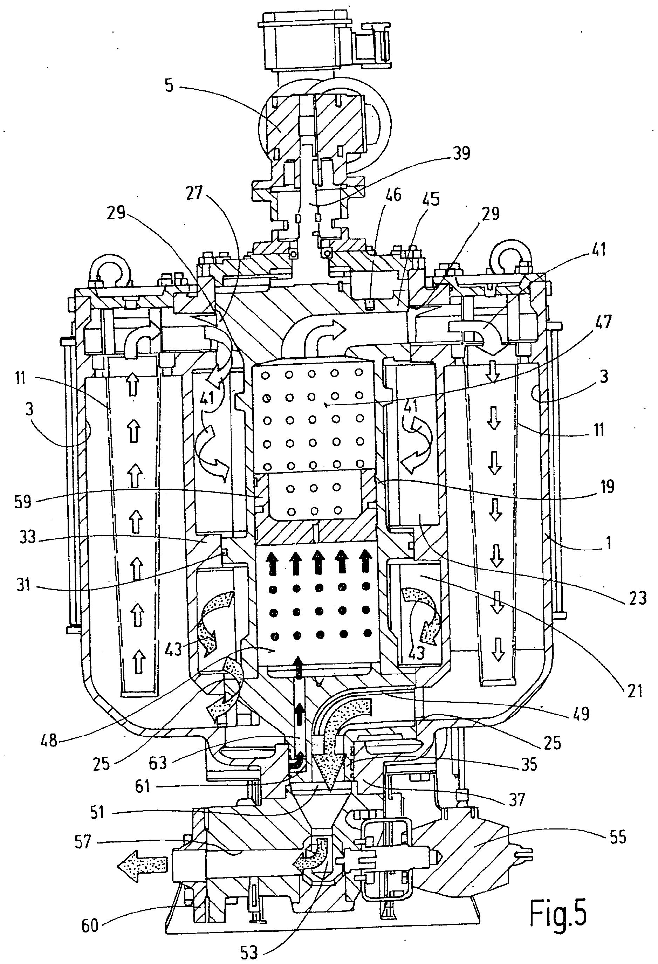

In der Fig. 1, die in den Teilfiguren 1A bis 1C jeweils eine Gesamtansicht der erfindungsgemäßen Filtervorrichtung zeigt, sind ein Gehäuse-Hauptteil mit 1, Filter-Elementkammern mit 3 und ein Antriebsteil mit 5 bezeichnet. Ein am Hauptteil 1 für die Zufuhr abzureinigenden Fluids vorgesehener Einlass ist mit 7 bezeichnet, und ein Auslass für abgereinigtes Fluid ist mit 9 bezeichnet. Die Fig. 1 verdeutlicht auch, dass die erfindungsgemäße Vorrichtung in der Art eines modularen Baukastensystems für einen Betrieb mit einer unterschiedlichen Anzahl von Filterelementen ausbildbar ist. So zeigt Fig. 1A ein Beispiel mit zwei Filter-Elementkammern 3, in denen jeweils ein Filterelement 11 (Fig. 4 und 5) aufnehmbar ist, während Fig. 1B ein Beispiel mit vier Elementkammern 3 und Fig. 1C ein Beispiel mit sechs Elementkammern 3 zeigen. In jeder Elementkammer 3 können auch mehrere Filterelemente 11 vorgesehen sein, etwa in Form einer sog. Filterkerze, wie dies vorliegend der Fall ist.

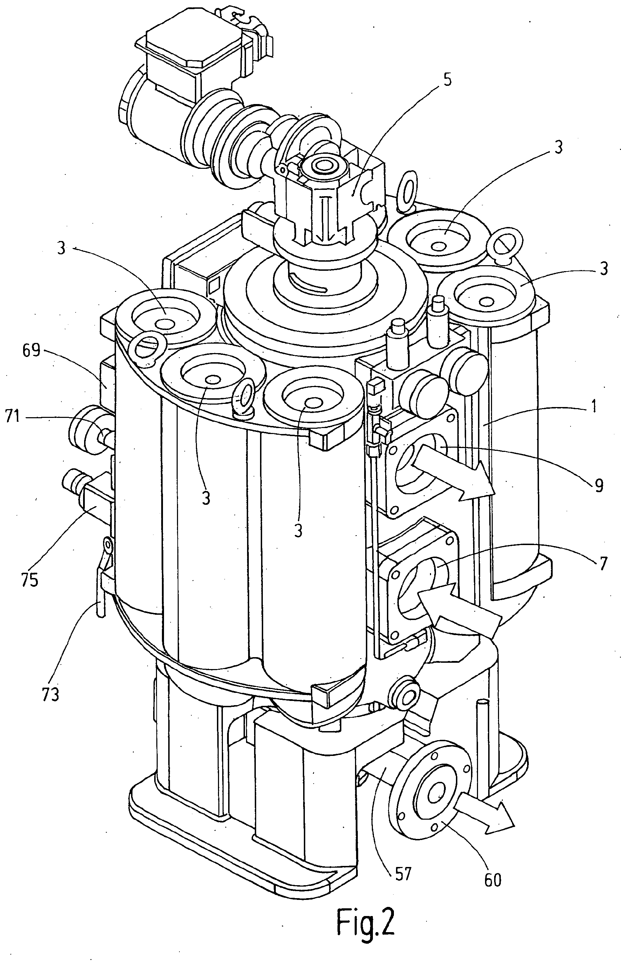

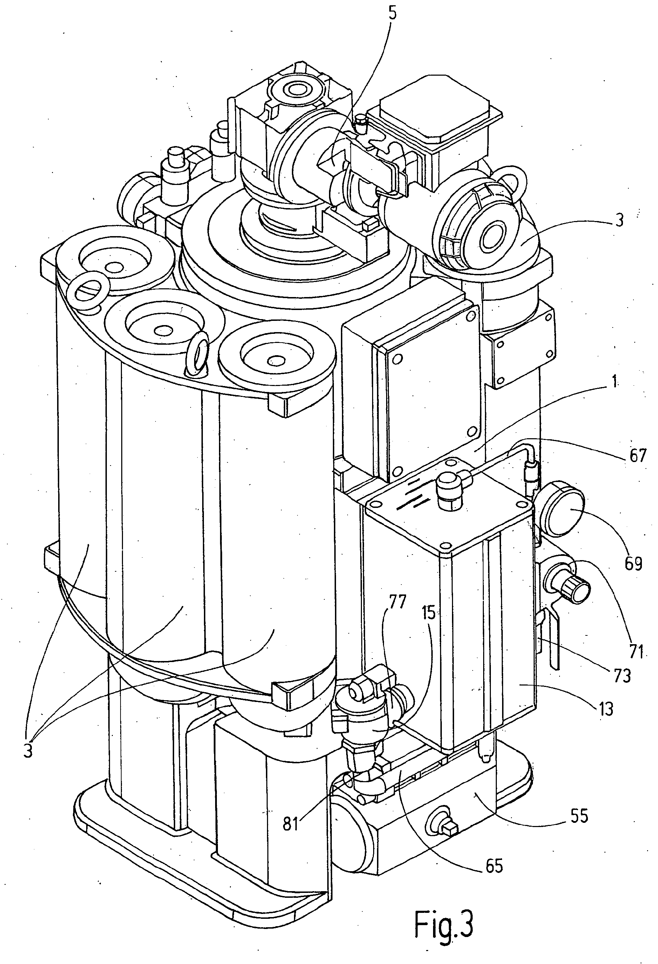

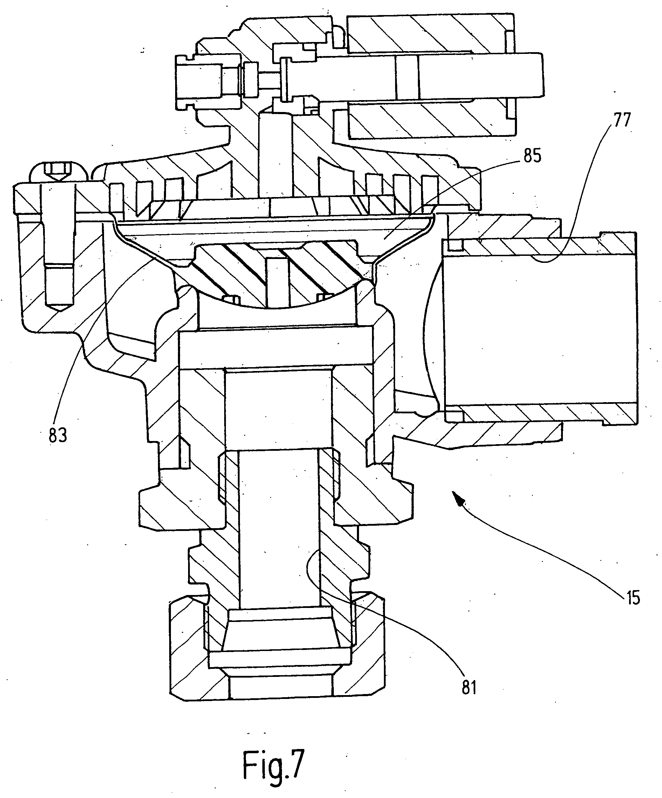

In den Fig. 2 und 3 ist die Ausführungsform der Filtervorrichtung mit sechs Elementkammern 3 dargestellt, wobei in Fig. 2 die Frontseite mit dem Einlass 7 und dem Auslass 9 zu sehen ist, während Fig. 3 die entgegengesetzte Rückseite zeigt, an der ein Spülgastank 13 angebracht ist. An dem Spülgastank 13 ist ein Membranventil 15 angeschlossen, das in Fig. 7 in Einzeldarstellung gezeigt und pneumatisch betätigbar ist. An das Membranventil 15 schließt sich wiederum eine Spülgasleitung 17 an, über die die Vorrichtung mit unter Druck stehendem Spülgas versorgbar ist, worauf unter Bezug auf Fig. 4 bis 6 näher eingegangen wird.

Von diesen zeigen Fig. 4 und 5 jeweils einen Längsschnitt der Vorrichtung, wobei Fig. 4 den Betriebszustand des Filtrationsbetriebes zeigt, während Fig. 5 den Zustand bei der Rückspülung des Filterelements 11 zeigt, das sich in der in Fig. 5 rechtsseitig gezeigten Elementkammern 3 befindet. Wie am deutlichsten den Fig. 2 und 3 entnehmbar ist, sind die Elementkammern 3 auf einer Kreislinie liegend derart angeordnet, dass sie einen zwischen ihnen liegenden Hydrospeicher konzentrisch umgeben. Der Hydrospeicher ist, wie die Fig. 4 und 5 zeigen, durch einen Kolbenspeicher 19 gebildet. Wie den Fig. 4 und 5 ebenfalls entnehmbar ist, sind im Gehäusehauptteil 1 zwischen den Elementkammern 3 und dem Kolbenspeicher 19 ein Eingangsraum 21, der mit dem Gehäuseeinlass 7 in Verbindung ist, sowie ein Ausgangsraum 23 gebildet, der mit dem Auslass 9 des Gehäuses in Verbindung ist. Der Eingangsraum 21 ist mit dem in Fig. 4 und 5 unten liegenden, rohseitigen Kammeranschluss 25 der im Filtrationsbetrieb befindlichen Elementkammern 3 in Verbindung. Der Ausgangsraum 23 ist an dem in Fig. 4 und 5 oben liegenden Ende mit einem Überströmraum 27 in Verbindung, mit dem wiederum die reinseitigen Kammeranschlüsse 29 der im Filtrationsbetrieb befindlichen Elementkammern 3 in Verbindung sind, wie dies der Fig. 4 entnehmbar ist, die den Zustand des Filtrationsbetriebes zeigt. Hierbei strömt, wie in Fig. 4 mit gepunkteten Pfeilen 41 angegeben ist, das Unfiltrat aus dem Eingangsraum 21 durch die Kammeranschlüsse 25 in die Elementkammern 3 und durchströmt die Filterelemente 11 von außen nach innen, aus denen das gefilterte Fluid über die reinseitigen Kammeranschlüsse 29 zum Überströmraum 27 gelangt. Von dort strömt das Filtrat, wie die Pfeile 43 zeigen, zum Ausgangsraum 23 und verlässt diesen über den Auslass 9.

Der Kolbenspeicher 19 ist um seine Zylinderachse drehbar zwischen Eingangsraum 21 und Ausgangsraum 23 drehbar, wobei eine abgedichtete Drehlagerung 31 an einem Gehäuseabsatz 33 vorgesehen ist, der den Eingangsraum 21 vom Ausgangsraum 23 trennt. Eine weitere, abgedichtete Drehlagerung 35 befindet sich an einem Bodenteil 37, das das Gehäuse bodenseitig verschließt. Für die Einstellung des Kolbenspeichers 29 auf gewünschte Drehstellungen ist der Kolbenspeicher 19 über eine Antriebswelle 39 mit dem Antriebsteil 5 gekuppelt, bei dem es sich um einen elektrischen Getriebemotor mit integriertem Drehpositionssensor handelt. Wie insbesondere bei der in Fig. 5 dargestellten Drehposition des Kolbenspeichers 19 zu ersehen ist, weist dieser an dem in der Zeichnung oberen Zylinderende eine Rückspülführung 45 auf, die vom Zylinderraum 47 ausgehend, auskragend, zum reinseitigen Kammeranschluss 29 der rückzuspülenden Elementkammer 3 verläuft, bei der es sich bei der Darstellung von Fig. 5 um die rechtsseitig sichtbare Elementkammer 3 handelt. An dem unteren Ende des Kolbenspeichers 19 weist dieser einen Rückspülarm 49 auf, der einen ähnlich auskragenden Verlauf wie die obere Rückspülführung 45 hat, sich jedoch von dem rohseitigen Kammeranschluss 25 der rückzuspülenden Elementkammer 3 zu einem Rückspülausgang 51 für den Austrag der Rückspülmenge mit mitgeführtem Schlamm erstreckt. Wie mit den Pfeilen 43 angedeutet, gelangt die mit Schlamm belastete Rückspülmenge über ein Rückspülventil in Form eines Kugelhahnes 53, der durch einen pneumatischen Antrieb 55 drehbar ist, zu einer Rückspülleitung 57 und zu einem Ausgangsflansch 60.

Während des Filtrationsvorganges, wie er in Fig. 4 verdeutlicht ist, ist der Kolbenspeicher 19 in einer Drehposition, bei der die Rückspülführung 45 nicht auf einen Kammeranschluss 29 einer rückzuspülenden Elementkammer 3 angeordnet ist. Bei diesem Betriebszustand strömt über eine Auffüllbohrung 46 (Fig. 5), die in der Wand der Rückspülführung 45 ausgebildet und zur Bildung einer engen Eintrittsöffnung im Durchmesser gestuft ist, aus dem Überströmraum 27 Filtrat in den Zylinderraum 47 des Kolbenspeichers 19 und befüllt diesen Zylinderraum 47, während sich der Kolben 59 des Kolbenspeichers 19 nach unten in die in Fig. 4 gezeigte Position bewegt. Bei dieser dem Filtrationsvorgang entsprechenden, in Fig. 4 gezeigten Drehposition ist der an der Unterseite des Kolbens 59 befindliche Zylinderraum 48 belüftet, weil sich der Eingang 61 eines Zuführkanals 63 für Spülgas, der lediglich in Fig. 5 sichtbar ist, mit einer nicht gezeigten Belüftungsnut im Bodenteil 37 des Gehäuses in Deckung befindet.

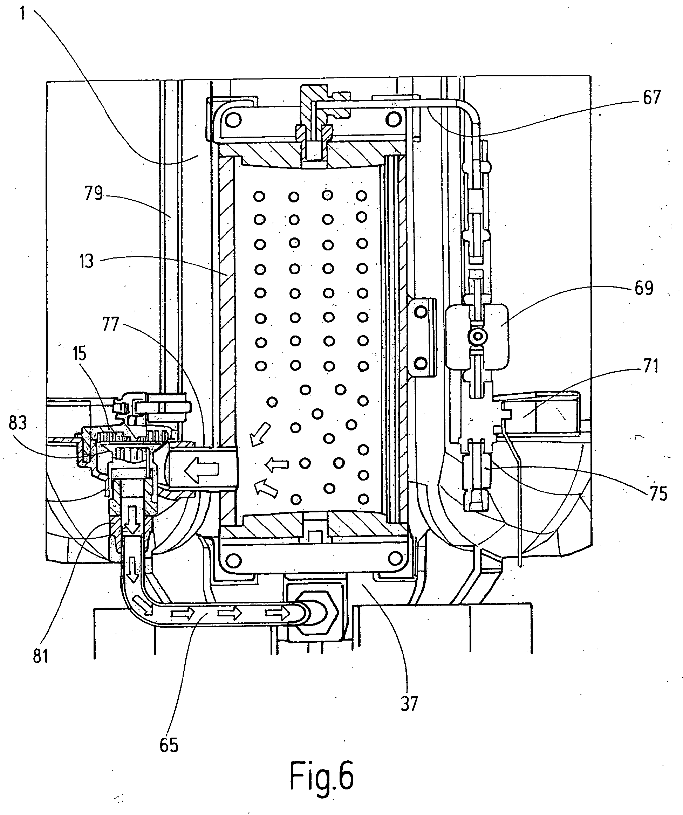

Wenn andererseits sich für einen Rückspülvorgang der Kolbenspeicher 19 in der in Fig. 5 gezeigten Drehstellung befindet, ist der Eingang 61 des Spülgaskanals 63 mit einer Spülgasleitung 65 in Verbindung, siehe Fig. 6. Für die Durchführung einer Rückspülung wird durch Zufuhr von Pressluft über den Kanal 63 der Kolben 59 nach oben getrieben, um aus dem im Zylinderraum 47 befindlichen Filtrat eine Strömung in der Art eines Druckstoßes zu erzeugen, der über die Rückspülführung 45 und den reinseitigen Kammeranschluss 29 der betreffenden Elementkammer 3 eine das Filterelement 11 von innen nach außen stoßartig durchströmende Fluidströmung erzeugt und Verunreinigungen ablöst, so dass mit Schlamm belastete Rückspülmenge über den Kammeranschluss 25 zum Rückspülausgang 51 gelangt und von dort über den geöffneten Kugelhahn 53 und die Rückspülleitung 57 austritt. Während bei den Darstellungen der Fig. 1 und 2 der Austrittsflansch 60 mit der Rückspülleitung 57 jeweils an der Frontseite der Vorrichtung liegend dargestellt ist, kann bei Bedarf der gesamte Rückspülausgang 51, einschließlich Kugelhahn 53, Rückspülleitung 57 und Flansch 60 in beliebigen Positionen am Gehäuse 1 angeordnet sein, weil keine Antriebsverbindung zwischen dem drehbaren Kolbenspeicher 19 und dem Rückspülausgang 51 gegeben ist.

Die Fig. 6 und 7 zeigen nähere Einzelheiten der Druckgasversorgung. Wie bereits erwähnt und in Fig. 3 gezeigt, ist ein Spülgastank 13 an der Rückseite der Vorrichtung angebracht. Über eine Druckleitung 67 mit vorgeschaltetem Druckregelventil 69 sowie einem Absperrhahn 71 ist der Spülgastank 13 mit Pressluft aufladbar, die dem Absperrhahn 71 von einer Druckluftleitung 73 her zugeführt wird, in der sich ein Rückschlagventil 75 befindet. Um aus dem Spülgastank 13 Pressluft als Druckstoß über die Spülgasleitung 65 zum Kolbenspeicher 19 zuzuführen, ist an einem Anschluss 77 des Spülgastanks 13 ein schnell öffnendes Ventil in Form des Membranventils 15 vorgesehen, das über eine Steuerleitung 79 pneumatisch betätigbar ist. Das in Fig. 7 näher dargestellte Membranventil 15 ist über eine Anschlussmuffe 81 mit der Spülgasleitung 65 verbunden. In Fig. 7 ist das Membranventil 15 in der Schließstellung dargestellt, in der die Membran 83 durch einen in dem an der Oberseite in der Membran 83 befindlichen Steuerraum 85 herrschenden Steuerdruck gegen den am Anschluss 77 herrschenden Druck des Spülgastanks 13 in der Schließstellung gehalten ist. Bei Belüftung des Steuerraums 85 öffnet das Membranventil 15 schnell, so dass mittels eines Pressluft-Druckstoßes der Kolben 59 des Kolbenspeichers 19 schlagartig für einen Rückspülvorgang bewegt wird.

## Patentansprüche

1. Filtervorrichtung mit einer Mehrzahl von Filterelementen (11), die in einem Filtergehäuse (1) mit einem Filtereinlass (7) für zu filtrierendes Fluid und einem Filterauslass (9) für das gefilterte Fluid aufnehmbar sind, wobei während des Filtrationsvorganges zumindest eines der Filterelemente (11) zum Abreinigen seiner wirksamen Filterfläche mittels einer Rückspüleinrichtung (45, 49) rückspülbar ist, die eine Drucksteuereinrichtung (19) zur Unterstützung der Rückspülung beinhaltet, wobei die Drucksteuereinrichtung einen Hydrospeicher (19) beinhaltet, dessen eine erste Fluidkammer (47) während des Filtrationsvorganges mit einer Menge an abgereinigtem Fluid befüllbar und für einen Rückspülvorgang mit einer Reinseite (29) des einen abzureinigenden Filterelements (11) verbindbar ist, wobei eine zweite Fluidkammer (48) des Hydrospeichers (19) für einen Rückspülvorgang mit einem Gasdruck beaufschlagbar ist, um durch eine dadurch bewirkte Bewegung eines Trennelementes (59) des Hydrospeichers (19) die Füllmenge des abgereinigten Fluids für den Rückspülvorgang zumindest teilweise aus der ersten Fluidkammer (47) wieder abzugeben, **dadurch gekennzeichnet, dass** die Filterelemente (11) jeweils in einer eigenen Elementkammer (3) aufnehmbar sind, die im Filtergehäuse (1) auf einer die Zylinderachse konzentrisch umgebenden Kreislinie angeordnet sind, wobei die Fluidkammer (47) während des Filtrationsvorganges über eine Rückspülführung (45) mit einer Reinseite (29) des einen abzureinigenden Filterelements (11) verbindbar ist, dass der Hydrospeicher (19) und die Rückspülführung (45), miteinander verbunden, im Filtergehäuse (1) drehbar angeordnet und für Einstellbewegungen zwischen Filtrationsbetrieb und Rückspülung mittels eines Drehantriebes (5) drehbar sind und dass im Filtergehäuse (1) ein sich an die reinseitigen Kammeranschlüsse (29) der Elementkammern (3) anschließender Überströmraum (27) vorgesehen ist, der mit einem Ausgangsraum (23) und dem Filterauslass (9) in Verbindung ist und aus dem die erste Fluidkammer (47) des Hydrospeichers (19) über eine in der Wand der Rückspülführung (45) befindliche Auffüllbohrung (46) mit abgereinigtem Fluid befüllbar ist.

2. Filtervorrichtung nach Anspruch 1, **dadurch gekennzeichnet, dass** die weitere Fluidkammer (48) des Hydrospeichers (19) für den Rückspülvorgang mittels einer Ventilsteuereinrichtung (15) mit einer Druckgasquelle (13) verbindbar ist.

3. Filtervorrichtung nach Anspruch 2, **dadurch gekennzeichnet, dass** als Druckgasquelle ein außerhalb des Filtergehäuses (1) angeordneter Spülgastank (13) vorgesehen ist.

4. Filtervorrichtung nach Anspruch 2 oder 3, **dadurch gekennzeichnet, dass** die Ventilsteuereinrichtung in einer von der Druckgasquelle (13) zum Hydrospeicher (19) führenden Spülgasleitung (65) ein schnell öffnendes Ventil (15) aufweist.

5. Filtervorrichtung nach Anspruch 4, **dadurch gekennzeichnet, dass** ein pneumatisch betätigbares Membranventil (15) in der Spülgasleitung (65) vorgesehen ist.

6. Filtervorrichtung nach einem der vorstehenden Ansprüche, **dadurch gekennzeichnet, dass** als Hydrospeicher ein Kolbenspeicher (19) vorgesehen ist, der zusammen mit der an einem Zylinderende angeordneten Rückspülführung (45) um die Zylinderachse drehbar ist.

7. Filtervorrichtung nach einem der vorstehenden Ansprüche, **dadurch gekennzeichnet, dass** der Hydrospeicher (19) zwischen den ihn umgebenden Elementkammern (3) derart angeordnet ist, dass sich die Fluidkammern (47, 48) des Hydrospeichers (19) zwischen den an den Enden der Filterelemente (11) befindlichen rohseitigen und reinseitigen Kammeranschlüssen (25, 29) der Elementkammern (3) befinden.

8. Filtervorrichtung nach einem der vorstehenden Ansprüche, **dadurch gekennzeichnet, dass** sich im Filtergehäuse (1) zwischen dem Hydrospeicher (19) und den umgebenden Elementkammern (3) ein die Rohseite beim Filtrationsvorgang bildender, den Filtereinlass (7) aufweisender Eingangsraum (21) und ein davon getrennter, mit dem Filterauslass (9) verbundener, die Reinseite beim Filtrationsvorgang bildender Ausgangsraum (23) befinden, von denen der Eingangsraum (21) mit dem rohseitigen Kammeranschluss (25) und der Ausgangsraum (23) mit dem reinseitigen Kammeranschluss (29) der im Filtrationsbetrieb befindlichen Elementkammern (3) in Verbindung ist.

9. Filtervorrichtung nach einem der vorstehenden Ansprüche, **dadurch gekennzeichnet, dass** bei den dem Rückspülen einer Elementkammer (3) entsprechenden Drehstellungen des Hydrospeichers (19) die Rückspülführung (45) mit dem reinseitigen Kammeranschluss (29) der rückzuspülenden Elementkammer (3) verbunden ist und dass an dem der Rückspülführung (45) entgegengesetzten Ende des Zylinders des Hydrospeichers (19) ein zusammen mit diesem drehbarer Rückspülarm (49) angeordnet ist, der für das Abströmen einer Rückspülmenge den rohseitigen Kammeranschluss (25) der rückzuspülenden Elementkammer (3) mit einer Rückspülleitung (57) verbindet.

10. Filtervorrichtung nach Anspruch 9, **dadurch gekennzeichnet, dass** der Rückspülarm (49) mit der Rückspülleitung (57) über ein motorisch betätigbares Rückspülventil (71) verbindbar ist.

11. Filtervorrichtung nach Anspruch 10, **dadurch gekennzeichnet, dass** das Rückspülventil in Form eines Kugelhahns (71) vorgesehen ist.

## Claims

1. A filtering apparatus comprising a plurality of filter elements (11) which can be accommodated in a filter housing (1) with a filter inlet (7) for fluid to be filtered and a filter outlet (9) for the filtered fluid, at least one of the filter elements (11) being able to be backwashed by means of a backwashing device (45, 49) for cleaning its effective filter surface during the filtration operation, which backwashing device comprises a pressure control device (19) for supporting the backwashing, the pressure control device comprising a hydraulic accumulator (19), a first fluid chamber (47) of which can be filled with a quantity of cleaned fluid during the filtration operation and can be connected to a clean side (29) of the one filter element (11) to be cleaned for a backwashing operation, gas pressure being able to be applied to a second fluid chamber (48) of the hydraulic accumulator (19) for a backwashing operation in order to eject the filling quantity of the cleaned fluid for the backwashing process again at least partially from the first fluid chamber (47) by means of a movement of a separating element (59) of the hydraulic accumulator (19) brought about in this way, **characterised in that** the filter elements (11) may each be accommodated in their own element chamber (3), and the element chambers are arranged in the filter housing (1) on a circular line concentrically surrounding the cylinder axis, the fluid chamber (47) being able to be connected to a clean side (29) of the one filter element (11) to be cleaned during the filtration operation by means of a backwashing guide (45), that the hydraulic accumulator (19) and the backwashing guide (45) are arranged rotatably, connected to one another, in the filter housing (1), and can be rotated for adjustment movements between filtration operation and backwashing by means of a rotational drive (5), and that an overflow space (27) attached to the clean-side chamber connections (29) of the element chambers (3) is provided which is connected to an output space (23) and the filter outlet (9), and from which the first fluid chamber (47) of the hydraulic accumulator (19) can be filled with cleaned fluid via a filling hole (46) located in the wall of the backwashing guide (45).

2. The filtering apparatus according to Claim 1, **characterised in that** the additional fluid chamber (48) of the hydraulic accumulator (19) can be connected to a compressed gas source (13) for the backwashing operation by means of a valve control device (15).

3. The filtering apparatus according to Claim 2, **characterised in that** a flushing gas tank (13) situated outside of the filter housing (1) is provided as the compressed gas source.

4. The filtering apparatus according to Claim 2 or 3, **characterised in that** the valve control device has a fast-opening valve (15) in a flushing gas line (65) leading from the compressed gas source (13) to the hydraulic accumulator (19).

5. The filtering apparatus according to Claim 4, **characterised in that** a pneumatically operable diaphragm valve (15) is provided in the flushing gas line (65).

6. The filtering apparatus according to any of the preceding claims, **characterised in that** a piston accumulator (19) is provided as a hydraulic accumulator which can rotate about the cylinder axis together with the backwashing guide (45) arranged on one end of the cylinder.

7. The filtering apparatus according to any of the preceding claims, **characterised in that** the hydraulic accumulator (19) is situated between the element chambers (3) surrounding it in such a way that the fluid chambers (47, 48) of the hydraulic accumulator (19) are located between the crude-side and clean-side chamber connections (25, 29) of the element chambers (3) situated at the ends of the filter elements (11).

8. The filtering apparatus according to any of the preceding claims, **characterised in that** an input space (21) having the filter inlet (7) and forming the crude side in the filtration operation and a separate output space (23) forming the clean side in the filtration operation and connected to the filter outlet (9) are present in the filter housing (1) between the hydraulic accumulator (19) and the surrounding element chambers (3), the input space of which is connected to the chamber connection (25) on the crude side and the output space (23) is connected to the chamber connection (29) of the element chambers (3) in filtration operation on the clean side.

9. The filtering apparatus according to any of the preceding claims, **characterised in that** in the rotational positions of the hydraulic accumulator (19) which correspond to the backwashing of an element chamber (3), the backwashing guide (45) is connected to the chamber connection (29) of the element chamber (3) to be backwashed on the clean side, and that there is arranged on the end of the cylinder of the hydraulic accumulator (19) opposite the backwashing guide (45) a backwashing arm (49) which can be rotated together with this hydraulic accumulator and which connects the chamber connection (25) of the element chamber (3) to be backwashed on the crude side to a backwashing line (57) for the outflow of a backwashing quantity.

10. The filtering apparatus according to Claim 9, **characterised in that** the backwashing arm (49) can be connected to the backwashing line (57) by means of a motor-operated backwashing valve (71).

11. The filtering apparatus according to Claim 10, **characterised in that** the backwashing valve is provided in the form of a ball valve (71).

## Revendications

1. Dispositif de filtration, comprenant une pluralité d'éléments (11) filtrants, qui peuvent être logés dans une enveloppe (1) de filtre, ayant une entrée (7) pour le fluide à filtrer et une sortie (9) pour le fluide filtré, dans lequel, pendant la filtration, au moins l'un des éléments (11) filtrants peut, pour nettoyer sa surface de filtre active, être lavé en retour au moyen d'un dispositif (45, 49) de lavage en retour, qui comporte un dispositif (19) de réglage de la pression pour favoriser le lavage en retour, le dispositif de réglage de la pression comportant un accumulateur (19) hydraulique, dont une première chambre (47) pour du fluide peut, pendant la filtration, être emplie d'une certaine quantité de fluide épuré et peut, pour une opération de lavage en retour, être reliée à un côté (29) propre d'un élément (11) filtrant à nettoyer, dans lequel une deuxième chambre (48) pour du fluide de l'accumulateur (19) hydraulique peut, pour un lavage en retour, être soumise à une pression de gaz pour recéder, par un déplacement ainsi provoqué d'un élément (59) de séparation de l'accumulateur (19) hydraulique, la quantité de remplissage du fluide épuré pour le lavage en retour, au moins en partie, à partir de la première chambre (47) pour du fluide,
**caractérisé en ce que**
les éléments (11) filtrants peuvent être logés respectivement dans leur propre chambre (3) pour élément, qui sont disposés dans l'enveloppe (1) du filtre sur une ligne circulaire entourant concentriquement l'axe du cylindre, dans laquelle
la chambre (47) pour du fluide peut, pendant la filtration, par un conduit (45) de lavage en retour, communiquer avec un côté (29) propre du un élément (11) filtrant à nettoyer, **en ce que** l'accumulateur (19) hydraulique et le conduit (45) de lavage en retour communiquent entre eux, sont montés tournants dans l'enveloppe (1) du filtre et peuvent tourner au moyen d'un entraînement (5) en rotation, pour des déplacements de réglage entre le fonctionnement en filtration et le lavage en retour, et **en ce qu'**il est prévu, dans l'enveloppe (1) du filtre, un espace (27) de trop-plein, qui est raccordé aux raccords (29) des chambres (3) pour élément, qui est communication avec un espace (23) de sortie et la sortie (9) du filtre et à partir duquel la première chambre (47) pour du fluide de l'accumulateur (19) hydraulique peut, par un trou (46) de remplissage se trouvant dans la paroi du conduit (45) de lavage en retour, être remplie de fluide épuré.

2. Dispositif de filtration suivant la revendication 1,
**caractérisé en ce que** l'autre chambre (48) pour du fluide de l'accumulateur (19) hydraulique peut, pour le lavage en retour, communiquer avec une source (13) de gaz sous pression au moyen d'un dispositif (15) de commande à soupape.

3. Dispositif de filtration suivant la revendication 2,
**caractérisé en ce qu'**il est prévu comme source de gaz sous pression un réservoir (13) de gaz de lavage, monté à l'extérieur de l'enveloppe (1) du filtre.

4. Dispositif de filtration suivant la revendication 2 ou 3,
**caractérisé en ce que** le dispositif de commande à soupape a une soupape (15) s'ouvrant rapidement dans un conduit (65) pour du gaz de lavage allant de la source (13) de gaz sous pression à l'accumulateur (19) hydraulique.

5. Dispositif de filtration suivant la revendication 4,
**caractérisé en ce qu'**une soupape (15) à membrane à actionnement pneumatique est prévue dans le conduit (65) pour du gaz de lavage.

6. Dispositif de filtration suivant l'une des revendications précédentes, **caractérisé en ce qu'**il est prévu comme accumulateur hydraulique un accumulateur (19) à piston, qui, ensemble avec le conduit (45) de lavage en retour, monté à une extrémité du cylindre, peut tourner autour de l'axe du cylindre.

7. Dispositif de filtration suivant l'une des revendications précédentes, **caractérisé en ce que** l'accumulateur (19) hydraulique est disposé entre les chambres (3) pour élément qui l'entourent, de manière à ce que les chambres (47, 48) pour du fluide de l'accumulateur (19) hydraulique se trouvent entre les raccords (25, 29), du côté sale et du côté propre se trouvant aux extrémités des éléments (11) filtrants, des raccords (25, 29) des chambres (3) pour élément.

8. Dispositif de filtration suivant l'une des revendications précédentes, **caractérisé en ce qu'**il y a dans l'enveloppe (1) du filtre, entre l'accumulateur (19) hydraulique et les chambres (3) pour élément qui l'entourent, un espace (21) d'entrée formant à la filtration le côté sale et ayant l'entrée (7) du filtre et, en étant séparé, un espace (23) de sortie communiquant avec la sortie (9) du filtre et formant à la filtration le côté propre, dont l'espace (21) d'entrée communique avec le raccord (25) du côté sale et l'espace (23) de sortie avec le raccord (29) du côté propre des chambres (3) pour éléments se trouvant en filtration.

9. Dispositif de filtration suivant l'une des revendications précédentes, **caractérisé en ce que**, en les positions de rotation correspondant au lavage en retour d'une chambre (3) pour élément, le conduit (45) de lavage en retour communique avec le raccord (29) du côté propre de la chambre (3) pour élément à laver en retour et **en ce que**, à l'extrémité, opposée au conduit (45) de lavage en retour, du cylindre de l'accumulateur (19) hydraulique est monté un bras (49) de lavage en retour, qui peut tourner ensemble avec celui-ci et qui, pour l'évacuation d'une quantité de lavage en retour, met le raccord (25), du côté sale de la chambre (3) pour élément à laver en retour, en communication avec un conduit (57) de lavage en retour.

10. Dispositif de filtration suivant la revendication 9,
**caractérisé en ce que** le bras (49) de lavage en retour peut être relié au conduit (57) de lavage en retour par une soupape (71) de lavage en retour pouvant être actionnée par un moteur.

11. Dispositif de filtration suivant la revendication 10,
**caractérisé en ce que** la soupape de lavage en retour est prévue sous la forme d'un robinet (71) à bille.
